(19)

Europäisches Patentamt

European Patent Office

Office européen des brevets

(11) **EP 4 611 293 A1**

(12) **EUROPEAN PATENT APPLICATION**
published in accordance with Art. 153(4) EPC

(43) Date of publication:
**03.09.2025 Bulletin 2025/36**

(21) Application number: **23905649.2**

(22) Date of filing: **28.11.2023**

(51) International Patent Classification (IPC):
*H04L 1/16* (2023.01)

(52) Cooperative Patent Classification (CPC):
**H04L 1/00; H04L 1/16**

(86) International application number:
**PCT/CN2023/134713**

(87) International publication number:
**WO 2024/131482 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.12.2022 CN 202211667707**

(71) Applicant: **Huawei Technologies Co., Ltd.
Shenzhen, Guangdong 518129 (CN)**

(72) Inventors:
• **CAO, Youlong
Shenzhen, Guangdong 518129 (CN)**
• **QIN, Yi
Shenzhen, Guangdong 518129 (CN)**
• **CHEN, Erkai
Shenzhen, Guangdong 518129 (CN)**
• **XU, Rui
Shenzhen, Guangdong 518129 (CN)**

(74) Representative: **Gill Jennings & Every LLP
The Broadgate Tower
20 Primrose Street
London EC2A 2ES (GB)**

(54) **DATA TRANSMISSION METHOD AND APPARATUS**

(57)    A data transmission method and an apparatus are provided, and relate to the field of wireless communication. The method includes: obtaining a first bit sequence, and sending feedback information. A length of the first bit sequence is associated with a first target code rate, the first bit sequence includes a second bit sequence, a length of the second bit sequence is associated with a second target code rate, the first target code rate and the second target code rate are associated with a first modulation and coding scheme index, and the feedback information is used to feed back whether the first bit sequence and the second bit sequence are correctly transmitted. In this way, a RAN node can determine, based on the feedback information, whether the second bit sequence is correctly transmitted, and further update, in time based on a transmission status of the second bit sequence, a target code rate for a next time of data transmission of a service corresponding to the second bit sequence, to increase a success rate of data decoding in the service.

EP 4 611 293 A1

Terminal

RAN node

S401 — Obtain the first bit sequence

S401 — Output a first bit sequence

S402: Feedback information

FIG. 4

## Description

This application claims priority to Patent Application No. 202211667707.9, filed with the China National Intellectual Property Administration on December 23, 2022 and entitled "DATA TRANSMISSION METHOD AND APPARATUS", which is incorporated herein by reference in its entirety.

## TECHNICAL FIELD

This application relates to the field of wireless communication, and in particular, to a data transmission method and an apparatus.

## BACKGROUND

In a communication system, a target code rate (target code rate) may be adjusted by using an open-loop link adaptation (open-loop link adaptation, OLLA) mechanism, so that a data transmit end performs channel encoding by using a target code rate that matches channel quality, to increase a decoding success rate at a data receive end. For example, the data transmit end is a base station, and the data receive end is a terminal. Service data 1 arrives at the base station at a moment t0, and the base station performs channel encoding on the service data 1 and sends encoded data to the terminal. After receiving the encoded data, the terminal performs decoding and feeds back a decoding status to the base station, so that the base station updates an OLLA parameter based on the decoding status, to obtain a new target code rate. Subsequently, if service data 2 arrives at the base station at a moment t1, the base station may perform channel encoding on the service data 2 based on the new target code rate, and send encoded data to the terminal.

However, in the foregoing process, if an interval between the moment t1 and the moment t0 is long, the base station cannot update the target code rate in time. Therefore, the new target code rate may not be suitable for channel quality at the moment t1, and performing channel encoding by using the new target code rate reduces a decoding success rate.

## SUMMARY

Embodiments of this application provide a data transmission method and an apparatus, to update a target code rate in time, and increase a decoding success rate.

To achieve the foregoing objective, the following technical solutions are used in embodiments of this application.

According to a first aspect, a data transmission method is provided. The method may be performed by a terminal; or may be performed by a module used in a terminal, for example, a chip, a chip system, or a circuit; or may be implemented by a logical node, a logical module, or software that can implement all or some functions of a terminal. This is not limited herein. For ease of description, an example in which the method is performed by the terminal is used for description below. The method includes: obtaining a first bit sequence, where a length of the first bit sequence is associated with a first target code rate, the first bit sequence includes a second bit sequence, a length of the second bit sequence is associated with a second target code rate, the first target code rate and the second target code rate are associated with a first modulation and coding scheme MCS index; and sending feedback information, where the feedback information is used to feed back whether the first bit sequence and the second bit sequence are correctly transmitted.

Based on the method provided in the first aspect, the terminal not only needs to feed back a decoding status of decoding the first bit sequence based on the first target code rate associated with the length of the first bit sequence, but also needs to feed back a decoding status of decoding the second bit sequence based on the second target code rate associated with the length of the second bit sequence in the first bit sequence. In this way, decoding statuses of two bit sequences with different target code rates can be fed back by transmitting one bit sequence (for example, the first bit sequence), so that an apparatus for receiving feedback updates, in time, a target code rate for a next time of data transmission of a service corresponding to the second bit sequence, to increase a success rate of data decoding in the service.

In a possible implementation, the length of the second bit sequence is related to a ratio of the first target code rate to the second target code rate.

Based on the foregoing possible implementation, the length of the second bit sequence may be determined.

In a possible implementation, the length of the second bit sequence satisfies $E'_r = E_r \times \dfrac{R}{R'}$ , where $E'_r$ represents the length of the second bit sequence, $E_r$ represents the length of the first bit sequence, R represents the first target code rate, and R' represents the second target code rate.

Based on the foregoing possible implementation, a specific calculation method for the length of the second bit sequence may be obtained. A product of the length of the first bit sequence and the first target code rate may represent a length of a non-encoded first bit sequence.

In a possible implementation, the first bit sequence includes a system bit sequence with a length of *Ms* and a check bit sequence with a length of *Mp*; and the second bit sequence includes the system bit sequence with the length of *Ms* and a check bit sequence with a length of *Mp', and Mp >Mp';* or the second bit sequence includes a system bit sequence with a length of *Ms',* and *Ms ≥ Ms'.*

Based on the foregoing possible implementation, the first bit sequence may be truncated to obtain the second bit sequence. For example, the first bit sequence is truncated based on the length of the second bit sequence, to obtain the second bit sequence.

In a possible implementation, the method further includes: receiving first indication information, where the first indication information indicates the first target code rate and the second target code rate.

Based on the foregoing possible implementation, the first target code rate and the second target code rate may be determined based on the first indication information.

In a possible implementation, the method further includes: receiving second indication information and first configuration information, where the second indication information indicates the first target code rate, and the first configuration information is used to configure a correspondence between the first target code rate and the second target code rate.

Based on the foregoing possible implementation, the first target code rate and the second target code rate may be determined based on the second indication information and the first configuration information.

In a possible implementation, the second target code rate is greater than the first target code rate.

Based on the foregoing possible implementation, a target code rate for a next time of data transmission of a service corresponding to a bit sequence (namely, the second bit sequence) with a low transmission reliability requirement may be updated by transmitting a bit sequence (namely, the first bit sequence) with a high transmission reliability requirement, to increase a success rate of data decoding in the service.

According to a second aspect, a data transmission method is provided. The method may be performed by a radio access network (radio access network, RAN) node; or may be performed by a module used in a RAN node, for example, a chip, a chip system, or a circuit; or may be implemented by a logical node, a logical module, or software that can implement all or some functions of a RAN node. This is not limited herein. For ease of description, an example in which the method is performed by a network device is used for description below. The method includes: outputting a first bit sequence, where a length of the first bit sequence is associated with a first target code rate, the first bit sequence includes a second bit sequence, a length of the second bit sequence is associated with a second target code rate, the first target code rate and the second target code rate are associated with a first modulation and coding scheme MCS index; and receiving feedback information, where the feedback information is used to feed back whether the first bit sequence and the second bit sequence are correctly transmitted.

Based on the method provided in the second aspect, the RAN node not only needs to update, based on a decoding status of decoding the first bit sequence based on the first target code rate associated with the length of the first bit sequence, a target code rate for a next time of data transmission of a service corresponding to the first bit sequence, but also needs to update, based on a decoding status of decoding the second bit sequence based on the second target code rate associated with the length of the second bit sequence in the first bit sequence, a target code rate for a next time of data transmission of a service corresponding to the second bit sequence. In this way, a target code rate for a next time of data transmission of a service corresponding to a bit sequence (for example, the second bit sequence) can be updated in time by transmitting another bit sequence (for example, the first bit sequence), to increase a success rate of data decoding in the service.

In a possible implementation, the length of the second bit sequence is related to a ratio of the first target code rate to the second target code rate.

Based on the foregoing possible implementation, the length of the second bit sequence may be determined.

In a possible implementation, the length of the second bit sequence satisfies $E_r' = E_r \times \dfrac{R}{R'}$, where $E_r'$ represents the length of the second bit sequence, $E_r$ represents the length of the first bit sequence, $R$ represents the first target code rate, and $R'$ represents the second target code rate.

Based on the foregoing possible implementation, a specific calculation method for the length of the second bit sequence may be obtained. A product of the length of the first bit sequence and the first target code rate may represent a length of a non-encoded first bit sequence.

In a possible implementation, the first bit sequence includes a system bit sequence with a length of *Ms* and a check bit sequence with a length of *Mp*; and the second bit sequence includes the system bit sequence with the length of *Ms* and a check bit sequence with a length of *Mp', and Mp >Mp';* or the second bit sequence includes a system bit sequence with a length of *Ms',* and *Ms ≥ Ms'.*

Based on the foregoing possible implementation, the first bit sequence may be truncated to obtain the second bit sequence. For example, the first bit sequence is truncated based on the length of the second bit sequence, to obtain the second bit sequence.

In a possible implementation, the method further includes: sending first indication information, where the first indication information indicates the first target code rate and the second target code rate.

Based on the foregoing possible implementation, an apparatus for receiving the first indication information may determine the first target code rate and the second target code rate.

In a possible implementation, the method further includes: sending second indication information and first configuration information, where the second indication information indicates the first target code rate, and the first configuration information is used to configure a correspondence between the first target code rate and the second target code rate.

Based on the foregoing possible implementation, an apparatus for receiving the second indication information and the first configuration information may determine the first target code rate and the second target code rate.

In a possible implementation, the second target code rate is greater than the first target code rate.

Based on the foregoing possible implementation, a target code rate for a next time of data transmission of a service corresponding to a bit sequence (namely, the second bit sequence) with a low transmission reliability requirement may be updated by transmitting a bit sequence (namely, the first bit sequence) with a high transmission reliability requirement, to increase a success rate of data decoding in the service.

According to a third aspect, a communication apparatus is provided, to implement the foregoing methods. The communication apparatus may be the terminal in the first aspect, an apparatus including the terminal, or a module in the terminal in the first aspect, for example, a chip, a chip system, or a circuit; or may be a logical node, a logical module, or a software that can implement some or all functions of the terminal. Alternatively, the communication apparatus may be the RAN node in the second aspect, an apparatus including the RAN node, or a module in the RAN node in the second aspect, for example, a chip, a chip system, or a circuit; or may be a logical node, a logical module, or a software that can implement some or all functions of the RAN node. The communication apparatus includes a corresponding module, unit, or means (means) for implementing the foregoing methods. The module, the unit, or the means may be implemented by hardware, software, or hardware executing corresponding software. The hardware or the software includes one or more modules or units corresponding to the foregoing functions.

With reference to the third aspect, in a possible implementation, the communication apparatus may include a processing module and an interface module. The processing module may be configured to implement a processing function in any one of the foregoing aspects and the possible implementations of the foregoing aspects. The processing module may be, for example, a processor. The interface module may also be referred to as an interface unit, and is configured to implement a sending function and/or a receiving function in any one of the foregoing aspects and the possible implementations of the foregoing aspects. The interface module may include an interface circuit, a transceiver machine, a transceiver, or a communication interface.

With reference to the third aspect, in a possible implementation, the interface module includes a sending module and a receiving module that are respectively configured to implement the sending and receiving functions in any one of the foregoing aspects and the possible implementations of the foregoing aspects.

According to a fourth aspect, a communication apparatus is provided, and includes a processor. The processor is configured to: be coupled to a memory, and after reading instructions in the memory, perform the method according to any one of the foregoing aspects based on the instructions. The communication apparatus may be the terminal in the first aspect, an apparatus including the terminal, or a module in the terminal in the first aspect, for example, a chip, a chip system, or a circuit; or may be a logical node, a logical module, or a software that can implement some or all functions of the terminal. Alternatively, the communication apparatus may be the RAN node in the second aspect, an apparatus including the RAN node, or a module in the RAN node in the second aspect, for example, a chip, a chip system, or a circuit; or may be a logical node, a logical module, or a software that can implement some or all functions of the RAN node.

With reference to the fourth aspect, in a possible implementation, the communication apparatus further includes a memory. The memory is configured to store necessary program instructions and data.

With reference to the fourth aspect, in a possible implementation, the communication apparatus is a chip or a chip system. Optionally, when the communication apparatus is a chip system, the communication apparatus may include a chip; or may include a chip and another discrete component.

According to a fifth aspect, a communication apparatus is provided, and includes a processor and an interface circuit. The interface circuit is configured to receive a computer program or instructions, and transmit the computer program or the instructions to the processor. The processor is configured to execute the computer program or the instructions, to enable the communication apparatus to perform the method according to any one of the foregoing aspects. The communication apparatus may be the terminal in the first aspect, an apparatus including the terminal, or a module in the terminal in the first aspect, for example, a chip, a chip system, or a circuit; or may be a logical node, a logical module, or a software that can implement some or all functions of the terminal. Alternatively, the communication apparatus may be the RAN node in the second aspect, an apparatus including the RAN node, or a module in the RAN node in the second aspect, for example, a chip, a chip system, or a circuit; or may be a logical node, a logical module, or a software that can implement some or all functions of the RAN node.

With reference to the fifth aspect, in a possible implementation, the communication apparatus is a chip or a chip system. Optionally, when the communication apparatus is a chip system, the communication apparatus may include a chip; or may include a chip and another discrete component.

According to a sixth aspect, a computer-readable storage medium is provided. The computer-readable storage medium stores instructions, and when the instructions are run on a computer, the computer is enabled to perform the method according to any one of the foregoing aspects.

According to a seventh aspect, a computer program product including instructions is provided. When the computer program product runs on a computer, the computer is enabled to perform the method according to any one of the foregoing aspects.

According to an eighth aspect, a communication system is provided. The communication system includes the terminal configured to perform the method in the first aspect and the RAN node configured to perform the method in the second aspect.

For technical effects achieved by any one of the possible implementations of the third aspect to the eighth aspect, refer to technical effects achieved by any one of the first aspect, the second aspect, or different possible implementations of the first aspect or the second aspect. Details are not described herein again.

It may be understood that the solutions in the foregoing aspects may be combined on a premise that the solutions are not contradictory.

## BRIEF DESCRIPTION OF DRAWINGS

FIG. 1A is a diagram of arrivals of an encoded haptic signal and an encoded video signal;

FIG. 1B is a diagram of a ring buffer;

FIG. 1C is a schematic flowchart of a method for determining, by a receive end based on a quantity of unquantized information bits, a TBS of an actual TB and a quantity of CBs included in a received TB;

FIG. 2 is a diagram of an architecture of a communication system according to an embodiment of this application;

FIG. 3 is a diagram of a hardware structure of a communication apparatus according to an embodiment of this application;

FIG. 4 is a first schematic flowchart of a data transmission method according to an embodiment of this application;

FIG. 5 is a diagram of a first bit sequence and a second bit sequence according to an embodiment of this application;

FIG. 6 is a second schematic flowchart of a data transmission method according to an embodiment of this application; and

FIG. 7 is a diagram of a structure of a communication apparatus according to an embodiment of this application.

## DESCRIPTION OF EMBODIMENTS

Before embodiments of this application are described, related technical terms and related procedures in embodiments of this application are explained and described. It may be understood that the explanations and descriptions are intended to facilitate understanding of embodiments of this application, but should not be construed as a limitation on the protection scope claimed in embodiments of this application.

1. Extended reality (extended reality, XR)

The XR may refer to a combination of real and virtual environments generated by using computing technologies and wearable devices, and human-machine interaction. The XR has advantages such as a plurality of views and strong interactivity, can provide brand-new experience for a user, and has great application value and great commercial potential. The XR mainly includes virtual-reality interaction technologies, for example, virtual reality (virtual reality, VR), augmented reality (augmented reality, AR), and mixed reality (mixed reality, MR), and can be widely applied to many fields such as entertainment, gaming, medical care, advertising, industry, online education, and engineering. The VR technology is mainly to render visual and audio scenarios to simulate sensory stimulation of vision and audio in the real world to a user as much as possible. The VR technology usually requires the user to wear an XR terminal (for example, a head-mounted device) to simulate a visual and/or auditory sense of the user. The VR technology may be further used to perform action tracking on the user, to update simulated visual and/or auditory content in time. The AR technology is mainly to provide visual and/or auditory additional information or artificially generated content in a real environment perceived by a user. The user may obtain the real environment directly (for example, without performing sensing, processing, and rendering), or may obtain the real environment indirectly (for example, by transferring the real environment through a sensor) and perform further enhancement processing. The MR technology is to insert some virtual elements into a physical scenario to provide a user with immersive experience in which these elements are a part of a real scenario. To improve experience of interaction between human and the virtual world, an XR service has strict requirements on a bandwidth and a delay. The XR service mainly includes a video transmission service. The video transmission service may be used to generate and transmit a video signal (or video data).

2. Multi-modal service

As a new service, the multi-modal service is added with a haptic experience dimension based on an XR service, so that remote touch and remote control can be implemented, thereby implementing remote sensing in a plurality of aspects such as vision, auditory, tactility, and kinesthetics. The multi-modal service has great development space in industrial automation, healthcare, distance education, and other related fields, provides a user with comprehensive interactive experience, and has great application value and business potential. Generally, the multi-modal service includes a video transmission service, a haptic service, and the like. The haptic service may be used to generate and transmit a haptic signal (or haptic data).

3. Video signal and haptic signal

An encoding and decoding principle of the video signal is different from an encoding and decoding principle of the haptic signal. A traffic feature of data in the video signal transmitted in a network is different from a traffic feature of data in the haptic signal transmitted in the network. Therefore, a service feature of an encoded video signal is also different from a service feature of an encoded haptic signal.

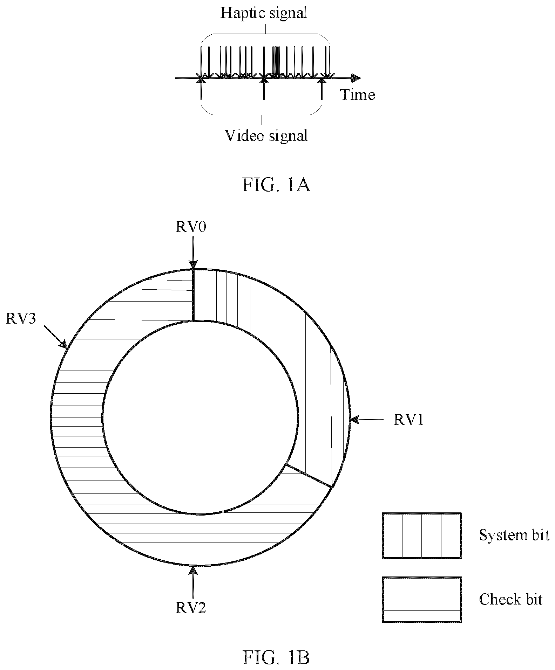

FIG. 1A is a diagram of arrivals of an encoded haptic signal and an encoded video signal. In FIG. 1A, the encoded video signal is periodic, and the encoded haptic signal is random. A downlink scenario is used as an example. If a typical quantity of haptic sensors for a single user is 60 paths (for example, including 40 paths of sensors on a haptic vest and 20 paths of sensors on a pair of haptic gloves), from a perspective of wireless network transmission, a haptic signal needs to be transmitted in nearly every slot. The video signal usually arrives periodically based on a frame rate. For example, for a video with a frame rate of 60 frames per second (frame per second, FPS), each picture frame ideally arrives at an interval of 16.67 milliseconds. In addition, a size of a video frame is also much larger than that of a haptic data packet. For example, for a video with 30 Mbps @ 60 FPS, a size of a single video frame is 60 KB to 100 KB.

It may be understood that the haptic signal has different service features before and after being encoded. Specifically, before the haptic signal is encoded, a signal generated by each path of haptic sensors is periodic. For example, 500 to 2000 packets are generated per second, and a size of each packet is 12 bytes to 48 bytes. After the haptic signal is encoded, a signal generated by each path of haptic sensors arrives randomly, a time interval between two arrivals complies with generalized Pareto distribution, and a size of a packet arriving each time remains unchanged. It may be understood that, although a size of a packet generated by each path of haptic sensors after the haptic signal is encoded remains unchanged upon arriving, in a case in which a user uses a plurality of haptic sensors simultaneously, because signals of the sensors are generated independently, for different users, sizes of haptic data arriving at the network may be different.

In addition to different encoding and decoding principles, different traffic features of the data transmitted in the network, and different service features of the encoded signals, due to different perceptions of human bodies, the haptic signal and the video signal also have different transmission requirements on the network. For example, based on a current standard definition, a reliability requirement of the video signal is 99%, a delay requirement is 10 ms, a reliability requirement of the haptic signal is 99.999%, and a delay requirement is 5 ms. Therefore, different reliability assurances need to be used for transmission at a physical layer. For example, time division duplex (time division duplex, TDD) is configured as DDDDU (where D represents a downlink slot, and U represents an uplink slot), and a subcarrier spacing is 30 kHz. Generally, there is only one retransmission opportunity within a delay requirement of 5 ms of the haptic signal. Therefore, an initial block error rate (initial block error rate, iBLER) at the physical layer may be set to 1%, and a transmission reliability requirement of 99.999% can be met after one time of retransmission and with combining gain accumulation. Generally, there are two or three retransmission opportunities within a delay requirement of 10 ms of the video signal. Therefore, the iBLER at the physical layer may be set to 10%.

It may be understood that the iBLER at the physical layer affects a modulation and coding scheme (modulation and coding scheme, MCS) selected in a signal sending process. For example, under same channel conditions, a higher value of the iBLER at the physical layer indicates a higher value of a selected MCS index (index). The MCS index may correspond to a group of parameters, for example, a modulation order (modulation order), a target code rate, and spectral efficiency (spectral efficiency). Table 1 shows one of a plurality of MCS tables defined in the current standard. In Table 1, each MCS index corresponds to a group of a modulation order, a target code rate, and spectral efficiency. It may be understood that, in a communication system, both a terminal and a RAN node store a plurality of MCS tables. The RAN node may indicate an MCS table in the plurality of MCS tables to the terminal, and indicate an MCS index in the MCS table. In this way, the terminal can determine a group of a modulation order, a target code rate, and spectral efficiency, and perform channel encoding or decoding by using the group of parameters.

Table 1

| MCS index | Modulation order | Target code rate (x1024) | Spectral efficiency |
|---|---|---|---|
| 0 | 2 | 120 | 0.2344 |
| 1 | 2 | 157 | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 438 | 2.5664 |
| 18 | 6 | 466 | 2.7305 |
| 19 | 6 | 517 | 3.0293 |
| 20 | 6 | 567 | 3.3223 |
| 21 | 6 | 616 | 3.6094 |
| 22 | 6 | 666 | 3.9023 |
| 23 | 6 | 719 | 4.2129 |
| 24 | 6 | 772 | 4.5234 |
| 25 | 6 | 822 | 4.8164 |
| 26 | 6 | 873 | 5.1152 |
| 27 | 6 | 910 | 5.3320 |
| 28 | 6 | 948 | 5.5547 |
| 29 | 2 | Reserved (reserved) | |
| 30 | 4 | Reserved | |
| 31 | 6 | Reserved | |

4. Channel encoding and decoding procedure

The channel encoding and decoding procedure may include the following steps.

S4.1: A transmit end obtains service data, and divides the service data into blocks, to obtain at least one code block (code block, CB).

It may be understood that the transmit end in embodiments of this application is an apparatus for sending the service data, for example, a terminal or a RAN node.

For example, a low-density parity-check (low-density parity-check, LDPC) encoder used in a new radio (new radio, NR) standard is used as an example. The encoder supports a specific CB length. For a base graph (base graph, BG) 1, a maximum CB length is 8448 bits, and for a BG2, a maximum CB length is 3840 bits. Therefore, when a length of the service data is greater than or equal to the maximum length (for example, 8448 bits or 3840 bits) supported by the encoder, the transmit end performs CB division, and adds a cyclic redundancy check (cyclic redundancy check, CRC) code to each CB obtained through the division, to obtain a plurality of CBs. Setting two types of BGs can effectively process different payload lengths and encoding rates. It may be understood that when the length of the service data is less than the maximum length supported by the encoder, the transmit end does not perform CB division, and includes the service data in a single CB.

S4.2: The transmit end performs channel encoding on the at least one CB.

The transmit end performs channel encoding on each CB based on a fixed code rate. The code rate may be represented as n/m, where n represents a quantity of bits in a non-encoded CB, and m represents a quantity of bits in a non-encoded CB. For example, a code rate of the BG 1 is 1/3, and a code rate of the BG 2 is 1/5.

S4.3: The transmit end performs rate matching on each encoded CB.

The following describes a process of the rate matching in detail by using a CB 1 as an example.

It may be understood that the CB 1 is a CB obtained through channel encoding, and includes a system bit sequence and a check bit sequence. In embodiments of this application, a bit sequence includes two or more bits. For example, the system bit sequence includes two or more system bits, and the check bit sequence includes two or more check bits.

First, the transmit end punctures the system bits in the CB 1, and writes, into a ring buffer, remaining bits in the CB 1 after the puncturing. A quantity of punctured bits is related to a size of the CB 1. The ring buffer may be shown in FIG. 1B. To be specific, starting from a $1^{st}$ bit in the remaining bits (that is, the remaining bits after the puncturing) in the CB 1, the transmit end sequentially writes the remaining bits in the CB 1 into the ring buffer shown in FIG. 1B. In this way, when the CB 1 needs to be transmitted, the transmit end determines a start position of a to-be-transmitted bit in the ring buffer and a length of the to-be-transmitted bit, to determine which bits in the CB 1 are to be transmitted.

Different start positions indicate different redundancy versions (redundancy versions, RVs). An NR standard supports four RVs: RV0, RV1, RV2, and RV3. Positions of the four RVs have been specified in the standard. In FIG. 1B, for example, the positions of the four RVs are marked. Generally, during initial transmission, the transmit end uses RV0 for sending. If retransmission is needed, the transmit end may perform sending in a sequence of RV2, RV3, and RV1. At a receive end, a plurality of RVs can be combined for decoding in a "soft combining" manner to increase decoding accuracy.

The following describes how the transmit end determines the length of the to-be-transmitted bit. First, the transmit end obtains an MCS used by a transport block (transport block, TB) in which the CB 1 is located, where the MCS mainly includes two parameters: a quadrature amplitude modulation (quadrature amplitude modulation, QAM) order (denoted as $Q$) and a target code rate (denoted as $R$), and obtains a size of the TB, that is, a transport block size (transport block size, TBS). In addition, the transmit end determines, based on the foregoing parameters, each encoded CB in the TB, for example, a bit length (that is, a length of an RV) output by the CB 1. For example, the bit length output by the CB 1 satisfies the following formula:

$$E_r = Q \times V \times Int[\frac{TBS}{Q \times V \times C}] \quad (\text{Formula 1}).$$

$Int[]$ is a rounding function, and may be understood as rounding up or rounding down based on an index value of the CB 1. $V$ is a quantity of layers for spatial multiplexing in a multi-antenna scenario. $C$ is a quantity of CBs obtained through CB division, that is, a quantity of the at least one CB in S4.1.

It may be understood that, if the transmit end is the RAN node, a scheduler at the transmit end may determine, based on a data amount in a local data buffer and a user channel condition, the MCS used by the TB in which the CB 1 is located, and obtain the TBS based on a quantity (denoted as $N_{RE}$) of resource elements (resource elements, REs) available for an air interface and the quantity (denoted as $V$) of layers for spatial multiplexing in the multi-antenna case, to determine the bit length output by each encoded CB in the TB.

It may be understood that, if the transmit end is the terminal, after obtaining the QAM order, the target code rate, the quantity of REs available for the air interface, and the quantity of layers for spatial multiplexing in the multi-antenna case, the RAN node may indicate these parameters to the terminal. For example, the RAN node indicates these parameters to the terminal by using downlink control information (downlink control information, DCI), so that the terminal determines, based on these parameters, the bit length output by each encoded CB in the TB.

S4.4: The transmit end sends the TB to the receive end. Correspondingly, the receive end receives the TB.

It may be understood that the receive end in embodiments of this application is an apparatus for receiving the service data. For example, if the transmit end is the RAN node, the receive end may be the terminal; or if the transmit end is the terminal, the receive end may be the RAN node.

S4.5: The receive end determines a TBS of an actual TB (that is, a TBS of a TB before the puncturing), a quantity of CBs included in the received TB, and a bit length output by each encoded CB in the received TB.

It may be understood that a method for determining, by the receive end, the bit length output by each encoded CB in the TB is similar to a method for determining, by the transmit end, the bit length output by each encoded CB in the TB. Therefore, refer to the corresponding descriptions in S4.3. Details are not described herein again.

The following describes a specific process in which the receive end determines the TBS of the actual TB and the quantity of CBs included in the received TB.

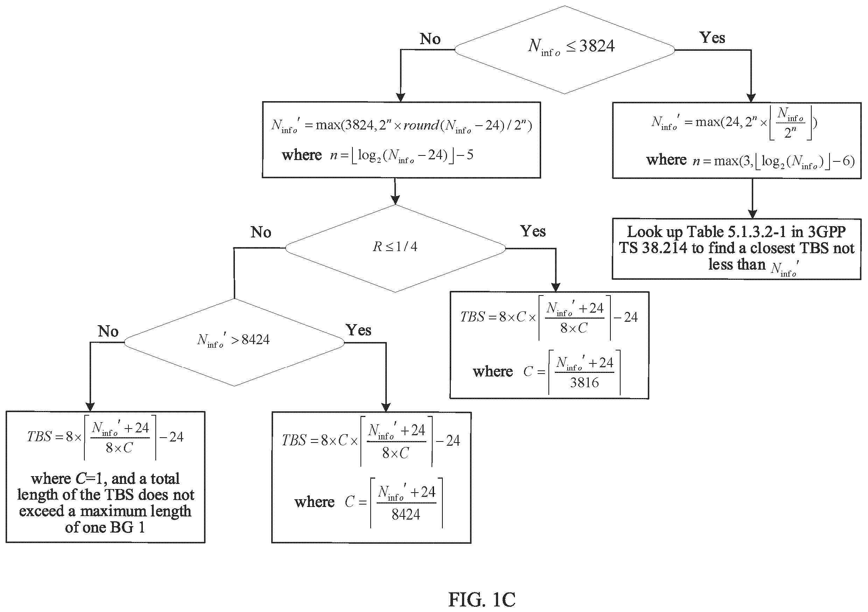

First, the receive end may determine a quantity of unquantized information bits, that is, a size (denoted as $N_{\text{inf}_o}$) of the service data, based on the quantity of REs available for the air interface, the QAM order, the target code rate, and the quantity of layers for spatial multiplexing in the multi-antenna case. For example, the quantity of unquantized information bits satisfies the following formula: $N_{\text{inf}_o} = N_{RE} \times Q \times V \times R$. Then, the receive end may determine, based on the quantity of unquantized information bits, the TBS (denoted as $TBS'$) of the actual TB and the quantity (denoted as $C$) of CBs included in the received TB. A specific calculation process may be shown in FIG. 1C.

S4.6: The receive end performs channel decoding based on the TBS of the actual TB, the quantity of CBs included in the received TB, and the bit length output by each encoded CB in the received TB.

5. OLLA mechanism

It may be understood that an objective of link adaptation is to better match an MCS index selected by a RAN node and actual channel quality. For example, the RAN node may periodically send a channel state information reference signal (channel state information reference signal, CSI-RS) to a terminal. The terminal may calculate channel quality by measuring the CSI-RS, evaluate the channel quality by using a channel quality indicator (channel quality indicator, CQI), and feed back the indicator to the RAN node, so that the RAN node determines, based on the CQI and a value of OLLA, an MCS index used for a next time of TB transmission. This ensures that the MCS index selected by the RAN node matches the actual channel quality.

Table 2 is a table of CQIs given in the current standard. In Table 2, each CQI index, except 0, corresponds to a group of a modulation (modulation) scheme, a code rate (code rate), and efficiency (efficiency). The modulation scheme includes quadrature phase shift keying (quadrature phase shift keying, QPSK), 16 quadrature amplitude modulation (quadrature amplitude modulation, QAM), and 64QAM.

Table 2

| CQI index | Modulation scheme | Code rate (x1024) | Efficiency |
|---|---|---|---|
| 0 | Out of range (out of range) | | |
| 1 | QPSK | 78 | 0.1523 |
| 2 | QPSK | 120 | 0.2344 |
| 3 | QPSK | 193 | 0.3770 |
| 4 | QPSK | 308 | 0.6016 |
| 5 | QPSK | 449 | 0.8770 |
| 6 | QPSK | 602 | 1.1758 |
| 7 | 16QAM | 378 | 1.4766 |
| 8 | 16QAM | 490 | 1.9141 |
| 9 | 16QAM | 616 | 2.4063 |
| 10 | 64QAM | 466 | 2.7305 |
| 11 | 64QAM | 567 | 3.3223 |
| 12 | 64QAM | 666 | 3.9023 |
| 13 | 64QAM | 772 | 4.5234 |

(continued)

| CQI index | Modulation scheme | Code rate (x1024) | Efficiency |
|---|---|---|---|
| 14 | 64QAM | 873 | 5.1152 |
| 15 | 64QAM | 948 | 5.5547 |

It may be understood that during system initialization, an initial value is set for the OLLA. Then, the value of the OLLA increases or decreases based on an acknowledgment (acknowledgment, ACK) message or a negative acknowledgment (negative acknowledgment, NACK) message fed back by the terminal after each time of TB transmission. For example, when the RAN node receives the ACK message fed back by the terminal, the RAN node may increase the value of the OLLA, and correspondingly, the RAN node selects a higher MCS index. When the RAN node receives the NACK message fed back by the terminal, the RAN node may decrease the value of the OLLA, and correspondingly, the RAN node selects a lower MCS index. In addition, the value of the OLLA is related to an iBLER.

For example, the value of the OLLA may satisfy the following formula:

$$P_{OLLA} = \begin{cases} Step, & ACK \\ -Step \times \dfrac{1-iBLER}{iBLER}, & NACK \end{cases}$$

$P_{OLLA}$ represents the value of the OLLA, and *Step* represents a step value. In other words, if the terminal feeds back the ACK message, the value of the OLLA is *Step*; or if the terminal sends the NACK message, the value of the OLLA is $-Step \times \dfrac{1-iBLER}{iBLER}$.

The following describes implementations of embodiments of this application in detail with reference to the accompanying drawings.

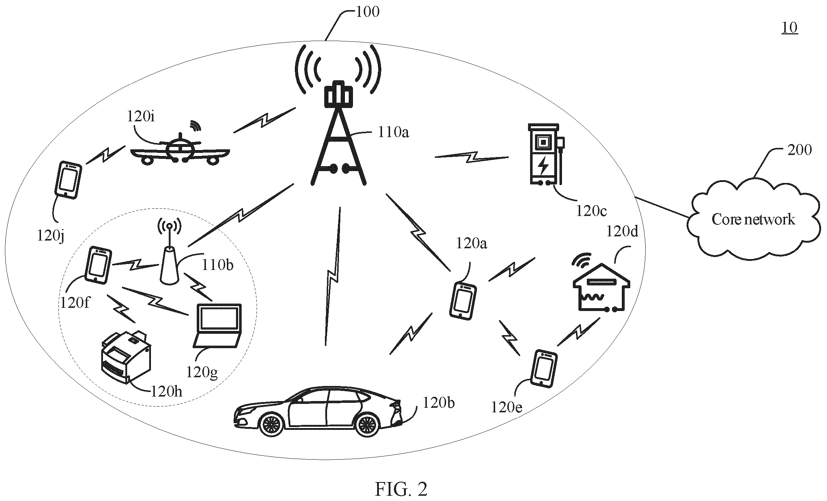

A method provided in embodiments of this application may be used in various communication systems. The following uses a communication system 10 shown in FIG. 2 as an example to describe the method provided in embodiments of this application. FIG. 2 is merely a diagram, and does not constitute a limitation on an applicable scenario of the technical solutions provided in this application.

FIG. 2 is a diagram of a possible and non-limitative system. As shown in FIG. 2, the communication system 10 includes a radio access network (radio access network, RAN) 100 and a core network (core network, CN) 200. The RAN 100 includes at least one RAN node (for example, 110a and 110b in FIG. 2, which are collectively referred to as 110) and at least one terminal (for example, 120a to 120j in FIG. 2, which are collectively referred to as 120). The RAN 100 may further include another RAN node, for example, a wireless relay device and/or a wireless backhaul device (not shown in FIG. 2). The terminal 120 is connected to the RAN node 110 in a wireless manner. The RAN node 110 is connected to the core network 200 in a wireless or wired manner. A core network device in the core network 200 and the RAN node 110 in the RAN 100 may be different physical devices, or may be a same physical device that integrates a logical function of the core network and a logical function of the radio access network.

The RAN 100 may be a 3GPP-related cellular system, for example, a 4G or 5G mobile communication system, or a future-oriented evolved system (for example, a 6G mobile communication system). Alternatively, the RAN 100 may be an open radio access network (open RAN, O-RAN or ORAN), a cloud radio access network (cloud radio access network, CRAN), or a wireless fidelity (wireless fidelity, Wi-Fi) system. Alternatively, the RAN 100 may be a communication system that integrates the foregoing two or more systems.

The RAN node 110 may also be sometimes referred to as an access network device, a RAN entity, an access node, or the like, and forms a part of a communication system, to help a terminal implement radio access. A plurality of RAN nodes 110 in the communication system 10 may be nodes of a same type, or may be nodes of different types. In some scenarios, roles of the RAN node 110 and the terminal 120 are relative. For example, a network element 120i in FIG. 2 may be a helicopter or an uncrewed aerial vehicle, and may be configured as a mobile base station. For the terminal 120j that accesses the RAN 100 through the network element 120i, the network element 120i is a base station. However, for the base station 110a, the network element 120i is a terminal. Both the RAN node 110 and the terminal 120 are sometimes referred to as communication apparatuses. For example, network elements 110a and 110b in FIG. 2 may be understood as communication apparatuses having a base station function, and network elements 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The RAN node may be a macro base station (for example, 110a in FIG. 2), a micro base station or an indoor station (for example, 110b in FIG. 2), a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a roadside unit (roadside unit, RSU). All or some functions of the RAN node in this application may alternatively be implemented by using a software function running on hardware, or may be implemented by using an instantiated virtualization function on a platform (for example, a cloud platform). The RAN node in this application may alternatively be a logical node, a logical module, or software that can implement all or some functions of the RAN node.

In another possible scenario, a plurality of RAN nodes coordinate to assist the terminal in implementing radio access, and different RAN nodes separately implement some functions of the base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have a different name, but a person skilled in the art may understand meanings of the name. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as an example for description in this application. Any one of the CU (or the CU-CP or the CU-UP), the DU, and the RU in this application may be implemented by using a software module, a hardware module, or a combination thereof.

The terminal may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IOT), virtual reality, augmented reality, industrial control, automatic driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A device form of the terminal is not limited in embodiments of this application.

The terminal may alternatively be a VR terminal, an AR terminal, or a mixed reality (mixed reality, MR) terminal. The VR terminal, the AR terminal, and the MR terminal may all be referred to as extended reality (extended reality, XR) terminals. The XR terminal may be, for example, a head-mounted device (for example, a helmet, a head-mounted display (head-mounted display, HMD), or glasses), may be an all-in-one device, or may be a television, a display, a car, a vehicle-mounted device, a tablet, or a smart screen. The XR terminal may access a network in a wireless or wired manner, for example, access the network through a Wi-Fi or 5G system. The XR terminal can present XR data to a user, and the user can experience diversified XR services by wearing or using the XR terminal.

The communication system 10 shown in FIG. 2 is merely used as an example, but is not intended to limit the technical solutions of this application. A person skilled in the art should understand that, in a specific implementation process, the communication system 10 may further include another device, and a quantity of RAN nodes and a quantity of terminals may alternatively be determined based on a specific requirement. This is not limited.

Optionally, each network element or device (for example, the RAN node or the terminal) in FIG. 2 in this embodiment of this application may also be referred to as a communication apparatus, and may be a general-purpose device or a dedicated device. This is not specifically limited in this embodiment of this application.

Optionally, related functions of each network element or device (for example, the RAN node or the terminal) in FIG. 2 in this embodiment of this application may be implemented by one device, or may be jointly implemented by a plurality of devices, or may be implemented by one or more functional modules in one device. This is not specifically limited in this embodiment of this application. It may be understood that, the foregoing function may be a network element in a hardware device, or may be a software function running on dedicated hardware, or a combination of hardware and software, or an instantiated virtualization function on a platform (for example, a cloud platform).

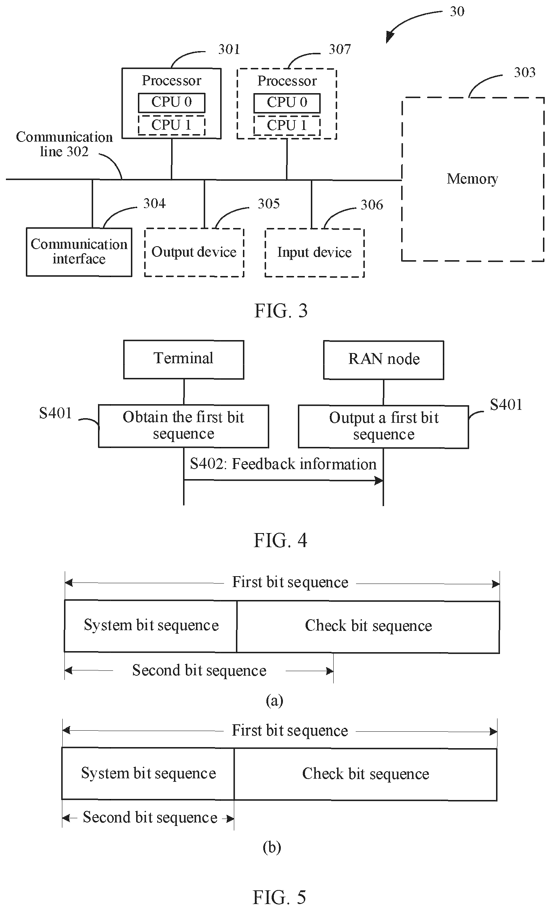

In a specific implementation, each network element or device (for example, the RAN node or the terminal) in FIG. 2 in this embodiment of this application may use a composition structure shown in FIG. 3, or include components shown in FIG. 3. FIG. 3 is a diagram of a hardware structure of a communication apparatus that may be used in an embodiment of this application. The communication apparatus 30 includes at least one processor 301 and at least one communication interface 304, and is configured to implement the method provided in embodiments of this application. The communication apparatus 30 may further include a communication line 302 and a memory 303.

The processor 301 may be a general-purpose central processing unit (central processing unit, CPU), a microprocessor, an application-specific integrated circuit (application-specific integrated circuit, ASIC), or one or more integrated circuits configured to control program execution of the solutions of this application.

The communication line 302 may include a path, for example, a bus, for transmitting information between the foregoing components.

The communication interface 304 is configured to communicate with another device or a communication network. The communication interface 304 may be any apparatus such as a transceiver, for example, may be an Ethernet interface, a radio access network (radio access network, RAN) interface, a wireless local area network (wireless local area network, WLAN) interface, a transceiver, a pin, a bus, or a transceiver circuit.

The memory 303 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessible by a computer, but is not limited thereto. The memory may exist independently, and is coupled to the processor 301 through the communication line 302. Alternatively, the memory 303 may be integrated with the processor 301. The memory provided in this embodiment of this application may be usually non-volatile.

The memory 303 is configured to store computer-executable instructions for executing the solutions provided in embodiments of this application, and the processor 301 controls execution. The processor 301 is configured to execute the computer-executable instructions stored in the memory 303, to implement the method provided in embodiments of this application. Alternatively, optionally, in this embodiment of this application, the processor 301 may perform functions related to processing in a method provided in the following embodiments of this application, and the communication interface 304 is responsible for communication with another device or a communication network. This is not specifically limited in this embodiment of this application.

Optionally, the computer-executable instructions in this embodiment of this application may also be referred to as application program code. This is not specifically limited in this embodiment of this application.

The coupling in this embodiment of this application may be an indirect coupling or a communication connection between apparatuses, units, or modules in an electrical form, a mechanical form, or another form, and is used for information exchange between the apparatuses, the units, or the modules.

In an embodiment, the processor 301 may include one or more CPUs, for example, a CPU 0 and a CPU 1 in FIG. 3.

In an embodiment, the communication apparatus 30 may include a plurality of processors, for example, the processor 301 and a processor 307 in FIG. 3. Each of the processors may be a single-core (single-CPU) processor, or may be a multi-core (multi-CPU) processor. The processor herein may be one or more devices, circuits, and/or processing cores configured to process data (for example, computer program instructions).

In an embodiment, the communication apparatus 30 may further include an output device 305 and/or an input device 306. The output device 305 is coupled to the processor 301, and may display information in a plurality of manners. For example, the output device 305 may be a liquid crystal display (liquid crystal display, LCD), a light emitting diode (light emitting diode, LED) display device, a cathode ray tube (cathode ray tube, CRT) display device, or a projector (projector). The input device 306 is coupled to the processor 301, and may receive user input in a plurality of manners. For example, the input device 306 may be a mouse, a keyboard, a touchscreen device, or a sensor device.

It may be understood that the composition structure shown in FIG. 3 does not constitute a limitation on the communication apparatus. In addition to the components shown in FIG. 3, the communication apparatus may include more or fewer components than those shown in the figure, or combine some components, or have a different component arrangement.

The following describes, with reference to the accompanying drawings, the method provided in embodiments of this application. Network elements in the following embodiments may have the components shown in FIG. 3, and details are not described again.

It may be understood that, names of messages between the network elements, names of parameters in the messages, or the like in the following embodiments of this application are merely examples, and there may be other names in a specific implementation. This is not specifically limited in embodiments of this application.

It may be understood that, in embodiments of this application, "/" may represent an "or" relationship between associated objects. For example, A/B may represent A or B. "And/or" may be used to describe three relationships existing between the associated objects. For example, "A and/or B" may represent the following three cases: Only A exists, both A and B exist, and only B exists, where A and B may be singular or plural. In addition, a representation similar to "at least one of A, B, and C" or "at least one of A, B, or C" is usually used to represent any one of the following: Only A exists; only B exists; only C exists; both A and B exist; both A and C exist; both B and C exist; and A, B, and C all exist. The foregoing uses a total of three elements A, B, and C as an example to describe an optional item of the project. When there are more elements in the representation, a meaning of the representation may be obtained according to the foregoing rules.

For ease of describing the technical solutions in embodiments of this application, in embodiments of this application, words such as "first" and "second" may be used to distinguish between technical features with a same or similar function. The words such as "first" and "second" do not limit a quantity and an execution sequence, and the words such as "first" and "second" do not indicate a definite difference. In embodiments of this application, a word such as "example" or "for example" is used to represent an example, evidence, or a description. Any embodiment or design solution described as "example" or "for example" should not be explained as being more preferred or having more advantages than another embodiment or design solution. The word such as "example" or "for example" is used to present a related concept in a specific manner for ease of understanding.

It may be understood that, "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in this application, "when" and "if" mean that corresponding processing is performed in an objective situation, are not intended to limit time, do not require a necessary determining action in an implementation, and do not mean any other limitation.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatus provided in embodiments of this application may also correspondingly implement these features or functions. Details are not described herein.

It may be understood that, a same step or steps or technical features that have a same function in embodiments of this application may be mutually referenced in different embodiments.

It may be understood that, in embodiments of this application, a RAN node and/or a terminal may perform some or all steps in embodiments of this application. These steps are merely examples. In embodiments of this application, other steps or variations of various steps may alternatively be performed. In addition, the steps may be performed in a sequence different from a sequence presented in embodiments of this application, and not all the steps in embodiments of this application may be necessarily performed.

It may be understood that, in the method provided in the following embodiments of this application, the method is illustrated by using an example in which the RAN node and the terminal are used as execution entities of interaction illustration. However, the execution entities of the interaction illustration are not limited in this application. For example, the RAN node in the method provided in the following embodiments of this application may be a chip, a chip system, or a processor that supports the RAN node in implementing the method, or may be a logical node, a logical module, or software that can implement all or some functions of the RAN node. Alternatively, the terminal in the method provided in the following embodiments of this application may be a chip, a chip system, or a processor that supports the terminal in implementing the method, or may be a logical node, a logical module, or software that can implement all or some functions of the terminal.

First, the data transmission method provided in embodiments of this application is described by using an example in which the RAN node is a transmit end of service data and the terminal is a receive end of the service data. The RAN node in the following embodiments may be the RAN node 110 in FIG. 2, and the terminal in the following embodiments may be the terminal 120 in FIG. 2.

FIG. 4 shows a data transmission method according to an embodiment of this application. The method may include the following steps.

S401: A RAN node outputs a first bit sequence. Correspondingly, a terminal obtains the first bit sequence.

In this embodiment of this application, that the RAN node outputs the first bit sequence may be understood as that the RAN node sends the first bit sequence to another apparatus. For example, the RAN node sends the first bit sequence to the terminal. Alternatively, that the RAN node outputs the first bit sequence may be understood as that a module of the RAN node outputs the first bit sequence to another module of the RAN node. It should be understood that after obtaining the first bit sequence, an RU of the RAN node sends the first bit sequence to the terminal. In conclusion, the first bit sequence is finally sent to the terminal.

In this embodiment of this application, that the terminal obtains the first bit sequence may be understood as that the terminal obtains the first bit sequence from another apparatus. For example, the terminal receives the first bit sequence from the RAN node. Alternatively, that the terminal obtains the first bit sequence may be understood as that a module of the terminal obtains the first bit sequence from another module of the terminal. For example, a baseband processing module of the terminal may restore a baseband signal from a radio frequency module, and then decode the baseband signal to obtain the first bit sequence.

It may be understood that the first bit sequence is one TB or one CB. In other words, the RAN node may perform block division, channel encoding, and rate matching on service data to obtain the first bit sequence, and send the first bit sequence to the terminal.

In a possible design, the first bit sequence includes a second bit sequence. In other words, the second bit sequence includes some bits in the first bit sequence, or the second bit sequence is obtained by truncating the first bit sequence.

In an example, the first bit sequence includes a system bit sequence with a length of *Ms* and a check bit sequence with a length of *Mp.* The second bit sequence includes the system bit sequence with the length of *Ms* and a check bit sequence with a length of *Mp'*, and *Mp > Mp'*; or the second bit sequence includes a system bit sequence with a length of *Ms'*, and *Ms ≥ Ms'*.

For example, in (a) in FIG. 5, the first bit sequence includes a system bit sequence and a check bit sequence, and the second bit sequence includes the system bit sequence and some bits in the check bit sequence. In (b) in FIG. 5, the first bit sequence includes a system bit sequence and a check bit sequence, and the second bit sequence includes the system bit sequence but does not include the check bit sequence.

In a possible design, a target code rate associated with a length of the first bit sequence is different from a target code rate associated with a length of the second bit sequence. For example, the length of the first bit sequence is associated with a first target code rate, and the length of the second bit sequence is associated with a second target code rate.

That the length of the first bit sequence is associated with the first target code rate may be understood as that when channel encoding is performed, the first bit sequence is obtained by the RAN node by dividing the service data into blocks, performing channel encoding by using the first target code rate, and performing rate matching. The length of the first bit sequence may be obtained by using Formula 1. For this process, refer to the foregoing descriptions of the channel encoding process. Details are not described herein again.

In a possible design, the length of the second bit sequence is related to a ratio of the first target code rate to the second target code rate.

For example, the length of the second bit sequence satisfies $E_r' = E_r \times \dfrac{R}{R'}$ ; or the length of the second bit sequence satisfies $E_r' = E_r \times \left\lfloor \dfrac{R}{R'} \right\rfloor$ ; or the length of the second bit sequence satisfies $E_r' = E_r \times \left\lceil \dfrac{R}{R'} \right\rceil$ ; or the length of the second bit sequence satisfies $E_r' = \left\lfloor E_r \times \dfrac{R}{R'} \right\rfloor$ ; or the length of the second bit sequence satisfies $E_r' = \left\lceil E_r \times \dfrac{R}{R'} \right\rceil$ . $E_r'$ represents the length of the second bit sequence, $E_r$ represents the length of the first bit sequence, *R* represents the first target code rate, *R'* represents the second target code rate, ⌊ ⌋ represents rounding down, and ⌈ ⌉ represents rounding up.

It may be understood that the foregoing formula is merely an example of the length of the second bit sequence. During specific application, the length of the second bit sequence may alternatively be obtained by using another formula, for example, a variation of the foregoing formula. This is not limited.

It may be understood that because the second bit sequence is obtained by removing some or all check bits from the first bit sequence, a transmission reliability requirement of the second bit sequence is lower than a transmission reliability requirement of the first bit sequence. Generally, a length of a bit sequence having a high transmission reliability requirement is associated with a low target code rate, and a length of a bit sequence having a low transmission reliability requirement is associated with a high target code rate. Therefore, the second target code rate is greater than the first target code rate. In other words, the first bit sequence is a bit sequence obtained by the RAN node by dividing service data having a high transmission reliability requirement into blocks, performing channel encoding by using a target code rate (namely, the first target code rate) corresponding to the high transmission reliability requirement, and performing rate matching. The second bit sequence may be understood as a bit sequence obtained by dividing service data having a high transmission reliability requirement into blocks, performing channel encoding by using a target code rate (namely, the second target code rate) corresponding to the low transmission reliability requirement, and performing rate matching. In this way, the RAN node sends the first bit sequence to the terminal, and the terminal may separately perform channel decoding on the first bit sequence and the second bit sequence, and feed back channel decoding statuses to the RAN node, so that the RAN node performs, based on the channel decoding statuses, link adaptation for the service data having the high transmission reliability requirement and link adaptation for the service data having the low transmission reliability requirement. For a specific process in which the RAN node performs channel decoding and link adaptation, refer to the foregoing explanations and descriptions in the related procedures in this application. Details are not described herein again.

For example, a haptic service with a high transmission reliability requirement in a multi-modal service and a video transmission service with a transmission reliability requirement lower than that of the haptic service are used as an example. The first bit sequence is a bit sequence obtained by the RAN node by dividing haptic data into blocks, performing channel encoding by using a target code rate (namely, the first target code rate) corresponding to the haptic data, and performing rate matching. The second bit sequence may be understood as a bit sequence obtained by dividing haptic data into blocks, performing channel encoding by using a target code rate (namely, the second target code rate) corresponding to video data, and performing rate matching. In this way, the RAN node can perform, based on the channel decoding statuses of the first bit sequence and the second bit sequence, link adaptation for the haptic data and link adaptation for the video data.

In a possible design, the first target code rate and the second target code rate are associated with a first MCS index.

In an example, the RAN node and the terminal maintain a plurality of MCS tables. Each MCS table defines an association relationship between an MCS index and two target code rates. For example, the MCS tables maintained by the RAN node and the terminal may be shown in Table 3. In Table 3, each MCS index corresponds to a group of a modulation order, a target code rate 1, a target code rate 2, and spectral efficiency. In this way, the RAN node can indicate one of the plurality of MCS tables and one MCS index in the table to the terminal, so that the terminal can determine the first target code rate and the second target code rate. For example, before S401, the RAN node sends third indication information and first indication information to the terminal. Correspondingly, the terminal receives the third indication information and the first indication information. The third indication information indicates a first MCS table in the plurality of MCS tables, and the first indication information indicates the first target code rate and the second target code rate. For example, the third indication information includes an identifier of the first MCS table, and the first indication information includes the first MCS index. If the third indication information includes an identifier of Table 3, and the first indication information includes "0", the terminal determines that the first target code rate is 120, and the second target code rate is 130.

It may be understood that the first indication information and the third indication information may be included in same information, or may be included in different information. This is not limited. For example, both the first indication information and the third indication information are included in DCI; or the third indication information is included in a radio resource control (radio resource control, RRC) message, and the first indication information is included in DCI.

Table 3

| MCS index | Modulation order | Target code rate 1 (x1024) | Target code rate 2 (x1024) | Spectral efficiency |
|---|---|---|---|---|
| 0 | 2 | 120 | 130 | 0.2344 |
| 1 | 2 | 157 | 171 | 0.3066 |
| 2 | 2 | 193 | 210 | 0.3770 |
| 3 | 2 | 251 | 277 | 0.4902 |
| 4 | 2 | 308 | 321 | 0.6016 |
| 5 | 2 | 379 | 401 | 0.7402 |
| 6 | 2 | 449 | 482 | 0.8770 |
| 7 | 2 | 526 | 567 | 1.0273 |
| 8 | 2 | 602 | 658 | 1.1758 |
| 9 | 2 | 679 | 732 | 1.3262 |
| 10 | 4 | 340 | 362 | 1.3281 |
| 11 | 4 | 378 | 399 | 1.4766 |
| 12 | 4 | 434 | 476 | 1.6953 |
| 13 | 4 | 490 | 543 | 1.9141 |
| 14 | 4 | 553 | 599 | 2.1602 |
| 15 | 4 | 616 | 663 | 2.4063 |

(continued)

| MCS index | Modulation order | Target code rate 1 (x1024) | Target code rate 2 (x1024) | Spectral efficiency |
|---|---|---|---|---|
| 16 | 4 | 658 | 697 | 2.5703 |
| 17 | 6 | 438 | 480 | 2.5664 |
| 18 | 6 | 466 | 497 | 2.7305 |
| 19 | 6 | 517 | 560 | 3.0293 |
| 20 | 6 | 567 | 602 | 3.3223 |
| 21 | 6 | 616 | 653 | 3.6094 |
| 22 | 6 | 666 | 705 | 3.9023 |
| 23 | 6 | 719 | 760 | 4.2129 |
| 24 | 6 | 772 | 815 | 4.5234 |
| 25 | 6 | 822 | 859 | 4.8164 |
| 26 | 6 | 873 | 903 | 5.1152 |
| 27 | 6 | 910 | 937 | 5.3320 |
| 28 | 6 | 948 | 999 | 5.5547 |
| 29 | 2 | Reserved | | |
| 30 | 4 | Reserved | | |
| 31 | 6 | Reserved | | |

In another example, the RAN node and the terminal maintain a plurality of MCS tables. Each MCS table defines an association relationship between an MCS index and the first target code rate. There is a correspondence between the first target code rate and the second target code rate. For example, the MCS tables maintained by the RAN node and the terminal may be shown in Table 1. In this way, the RAN node can indicate one of the plurality of MCS tables, one MCS index in the table, and the foregoing correspondence to the terminal, so that the terminal can determine the first target code rate and the second target code rate. For example, before S401, the RAN node sends third indication information, second indication information, and first configuration information to the terminal. Correspondingly, the terminal receives the third indication information, the second indication information, and the first configuration information. The third indication information indicates a first MCS table in the plurality of MCS tables, the second indication information indicates the first target code rate, and the first configuration information is used to configure the correspondence. For example, the third indication information includes an identifier of the first MCS table, the first indication information includes the first MCS index, and the first configuration information includes a difference between the second target code rate and the first target code rate or a function relationship between the second target code rate and the first target code rate. If the third indication information includes an identifier of Table 1, the second indication information includes "0", and the first configuration information includes a difference of 10 between the second target code rate and the first target code rate, the terminal determines that the first target code rate is 120, and the second target code rate is 130.

It may be understood that the second indication information and the third indication information may be included in same information, or may be included in different information. This is not limited. For example, both the second indication information and the third indication information are included in DCI; or the third indication information is included in an RRC message, and the first indication information is included in DCI. The first configuration information may be included in the RRC message.

S402: The terminal sends feedback information to the RAN node. Correspondingly, the RAN node receives the feedback information from the terminal.

The feedback information is used to feed back whether the first bit sequence and the second bit sequence are correctly transmitted. For example, the feedback information is an ACK message or a NACK message.

In a possible design, the feedback information includes fourth indication information and fifth indication information. The fourth indication information is used to feed back whether the first bit sequence is correctly transmitted, and the fifth indication information is used to feed back whether the second bit sequence is correctly transmitted.

In an example, the fourth indication information and the fifth indication information each include one bit. If a value of the bit in the fourth indication information is "0", it indicates that the first bit sequence is incorrectly transmitted; if a value of the bit in the fourth indication information is "1", it indicates that the first bit sequence is correctly transmitted; or vice versa.

Similarly, if a value of the bit in the fifth indication information is "0", it indicates that the second bit sequence is incorrectly transmitted; if a value of the bit in the fifth indication information is "1", it indicates that the second bit sequence is correctly transmitted; or vice versa.

In another possible design, the feedback information includes sixth indication information. The sixth indication information is used to feed back whether both the first bit sequence and the second bit sequence are correctly transmitted.

In an example, the sixth indication information includes one bit. If a value of the bit in the sixth indication information is "0", it indicates that at least one bit sequence in the first bit sequence and the second bit sequence is incorrectly transmitted; if a value of the bit in the sixth indication information is "1", it indicates that both the first bit sequence and the second bit sequence are correctly transmitted; or vice versa.

In S402, that the first bit sequence or the second bit sequence is correctly transmitted may be understood as that the terminal correctly decodes the first bit sequence or the second bit sequence. That the first bit sequence or the second bit sequence is correctly transmitted may be understood as that the terminal decodes the first bit sequence or the second bit sequence, but the decoding fails.

It may be understood that after S402, the RAN node may select, based on the feedback information, an MCS index for a next time of data transmission of a service (for example, the haptic service) corresponding to the first bit sequence, and select an MCS index for a next time of data transmission of a service (for example, the video transmission service) corresponding to the second bit sequence.

In this embodiment of this application, "sending information to the RAN node" may be understood as that a destination of the information is the RAN node, and may include directly or indirectly sending information to the RAN node. "Receiving information from the RAN node" may be understood as that a source of the information is the RAN node, and may include directly or indirectly receiving the information. Information may undergo necessary processing between the source for sending the information and the destination, for example, a format change. However, the destination may understand valid information from the source. Similar descriptions in this application may be understood similarly, and details are not described again.

The actions of the terminal or the RAN node in S401 and S402 may be performed by the processor 301 in the communication apparatus 30 shown in FIG. 3 by invoking the application program code stored in the memory 303. This is not limited in this embodiment of this application.

Based on the method shown in FIG. 4, the RAN node may send the first bit sequence to the terminal. During decoding, the terminal not only decodes the first bit sequence based on the first target code rate associated with the length of the first bit sequence, but also decodes the second bit sequence based on the second target code rate associated with the length of the second bit sequence in the first bit sequence. In addition, the terminal feeds back the decoding statuses of the first bit sequence and the second bit sequence. In this way, decoding statuses of two bit sequences with different target code rates can be fed back by transmitting one bit sequence (for example, the first bit sequence), so that the RAN node can update, in time, a target code rate for a next time of data transmission of a service corresponding to the second bit sequence, to increase a success rate of data decoding in the service.

For the method shown in FIG. 4, the data transmission method provided in embodiments of this application is described by using an example in which the RAN node is a transmit end of the service data and the terminal is a receive end of the service data. The following describes the data transmission method provided in embodiments of this application by using an example in which the terminal is a transmit end of the service data and the RAN node is a receive end of the service data.

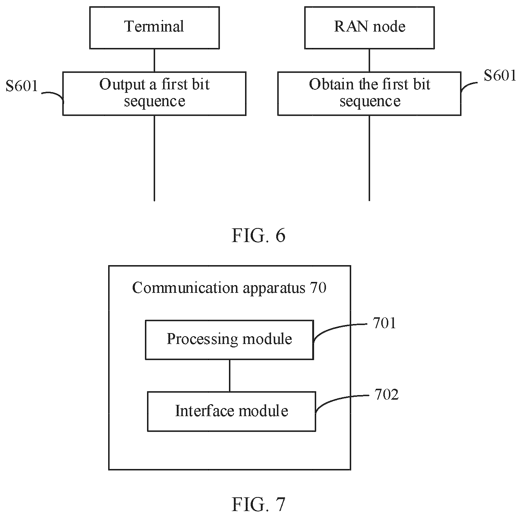

FIG. 6 shows another data transmission method according to an embodiment of this application. The method may include the following steps.

S601: A terminal outputs a first bit sequence. Correspondingly, a RAN node obtains the first bit sequence.

In this embodiment of this application, that the terminal outputs the first bit sequence may be understood as that the terminal sends the first bit sequence to another apparatus. For example, the terminal sends the first bit sequence to the RAN node. Alternatively, that the terminal outputs the first bit sequence may be understood as that a module of the terminal outputs the first bit sequence to another module of the terminal. It should be understood that, after obtaining the first bit sequence, the another module sends the first bit sequence to the RAN node. In conclusion, the first bit sequence is finally sent to the RAN node.

In this embodiment of this application, that the RAN node obtains the first bit sequence may be understood as that the RAN node obtains the first bit sequence from another apparatus. For example, the RAN node receives the first bit sequence from the terminal. Alternatively, that the RAN node obtains the first bit sequence may be understood as that a module of the RAN node obtains the first bit sequence from another module of the RAN node.

It may be understood that, for related descriptions of the first bit sequence, refer to the corresponding descriptions in S401. Details are not described again.

It may be understood that, after obtaining the first bit sequence, the RAN node may separately perform channel decoding on the first bit sequence and the second bit sequence, and based on channel decoding statuses, the RAN node selects an MCS index for a next time of data transmission of a service (for example, a haptic service) corresponding to the first bit sequence, and selects an MCS index for a next time of data transmission of a service (for example, a video transmission service) corresponding to the second bit sequence.

Optionally, before S601, the RAN node sends third indication information and first indication information to the terminal. Correspondingly, the terminal receives the third indication information and the first indication information. Alternatively, before S601, the RAN node sends third indication information and second indication information to the terminal. Correspondingly, the terminal receives the third indication information and the second indication information. In this way, the terminal may determine a first target code rate, and perform channel encoding based on the first target code rate. Optionally, the RAN node further sends first configuration information to the terminal. Correspondingly, the terminal receives the first configuration information. For descriptions of the third indication information, the first indication information, the second indication information, and the first configuration information, refer to the descriptions in S401. Details are not described again.

The actions of the terminal or the RAN node in S601 may be performed by the processor 301 in the communication apparatus 30 shown in FIG. 3 by invoking the application program code stored in the memory 303. This is not limited in this embodiment of this application.

Based on the method shown in FIG. 6, the terminal may send the first bit sequence to the RAN node. During decoding, the RAN node not only decodes the first bit sequence based on the first target code rate associated with a length of the first bit sequence, but also decodes the second bit sequence based on a second target code rate associated with a length of the second bit sequence in the first bit sequence. In addition, the RAN node updates, based on decoding statuses of the first bit sequence and the second bit sequence, a target code rate for a next time of data transmission of the service corresponding to the second bit sequence and a target code rate for a next time of data transmission of the service corresponding to the first bit sequence. In this way, decoding statuses of two bit sequences with different target code rates can be obtained by transmitting one bit sequence (for example, the first bit sequence), so that the RAN node can update, in time, the target code rate for a next time of data transmission of the service corresponding to the second bit sequence, to increase a success rate of data decoding in the service.

Embodiments mentioned above in this application may be combined when the solutions do not conflict. This is not limited.

The foregoing mainly describes the solutions provided in embodiments of this application from a perspective of interaction between network elements. Correspondingly, an embodiment of this application further provides a communication apparatus. The communication apparatus may be the RAN node in the foregoing method embodiments, or an apparatus including the foregoing RAN node, or a component that can be configured for the RAN node. Alternatively, the communication apparatus may be the terminal in the foregoing method embodiments, or an apparatus including the foregoing terminal, or a component that can be configured for the terminal. It may be understood that to implement the foregoing functions, the foregoing RAN node or terminal includes corresponding hardware structures and/or software modules for implementing the functions. A person skilled in the art should be easily aware that, in combination with units and algorithm operations of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

It should be understood that interaction between network elements is described above by using the terminal and the RAN node as an example. Actually, processing performed by the terminal is not limited to being performed only by a single network element, and processing performed by the RAN node is not limited to being performed only by a single network element. For example, processing performed by the RAN node may be performed by at least one of a CU, a DU, and an RU.

In embodiments of this application, functional modules of the RAN node or the terminal may be obtained through division based on the foregoing method examples. For example, each functional module may be obtained through division based on each corresponding function, or two or more functions may be integrated into one processing module. The integrated module may be implemented in a form of hardware, or may be implemented in a form of a software functional module. It may be understood that, in embodiments of this application, module division is an example, and is merely logical function division. In an actual implementation, there may be another division manner.

For example, when the functional modules are obtained through division in an integrated manner, FIG. 7 is a diagram of a structure of a communication apparatus 70. The communication apparatus 70 includes a processing module 701 and an interface module 702. The processing module 701 may also be referred to as a processing unit, and is configured to perform an operation other than receiving and sending operations. For example, the processing module may be a processing circuit or a processor. The interface module 702 may also be referred to as an interface unit, and is configured to perform receiving and sending operations. For example, the interface module may be an interface circuit, a transceiver machine, a transceiver, or a communication interface.

In some embodiments, the communication apparatus 70 may further include a storage module (not shown in FIG.

7), configured to store program instructions and data.

For example, the communication apparatus 70 is configured to implement a function of a terminal. For example, the communication apparatus 70 is the terminal described in the embodiment shown in FIG. 4.

The processing module 701 is configured to obtain a first bit sequence. A length of the first bit sequence is associated with a first target code rate, the first bit sequence includes a second bit sequence, a length of the second bit sequence is associated with a second target code rate, and the first target code rate and the second target code rate are associated with a first MCS index. For example, the processing module 701 may be configured to perform S401.

The interface module 702 is configured to send feedback information. The feedback information is used to feed back whether the first bit sequence and the second bit sequence are correctly transmitted. For example, the interface module 702 may be configured to perform S402.

In a possible implementation, the length of the second bit sequence is related to a ratio of the first target code rate to the second target code rate.

In a possible implementation, the length of the second bit sequence satisfies $E'_r = E_r \times \dfrac{R}{R'}$ , where $E'_r$ represents the length of the second bit sequence, $E_r$ represents the length of the first bit sequence, $R$ represents the first target code rate, and $R'$ represents the second target code rate.

In a possible implementation, the first bit sequence includes a system bit sequence with a length of *Ms* and a check bit sequence with a length of *Mp*; and the second bit sequence includes the system bit sequence with the length of *Ms* and a check bit sequence with a length of *Mp', and Mp >Mp';* or the second bit sequence includes a system bit sequence with a length of *Ms',* and *Ms ≥ Ms'.*

In a possible implementation, the interface module 702 is further configured to receive first indication information. The first indication information indicates the first target code rate and the second target code rate.

In a possible implementation, the interface module 702 is further configured to receive second indication information and first configuration information. The second indication information indicates the first target code rate, and the first configuration information is used to configure a correspondence between the first target code rate and the second target code rate.

In a possible implementation, the second target code rate is greater than the first target code rate.

When the communication apparatus 70 is configured to implement the function of the terminal, for other functions that can be implemented by the communication apparatus 70, refer to the related descriptions of the embodiment shown in FIG. 4. Details are not described again.

Alternatively, for example, the communication apparatus 70 is configured to implement a function of a RAN node. For example, the communication apparatus 70 is the RAN node in the embodiment shown in FIG. 4.

The processing module 701 is configured to output a first bit sequence. A length of the first bit sequence is associated with a first target code rate, the first bit sequence includes a second bit sequence, a length of the second bit sequence is associated with a second target code rate, and the first target code rate and the second target code rate are associated with a first MCS index. For example, the processing module 701 may be configured to perform S401.

The interface module 702 is configured to receive feedback information. The feedback information is used to feed back whether the first bit sequence and the second bit sequence are correctly transmitted. For example, the interface module 702 may be configured to perform S402.

In a possible implementation, the length of the second bit sequence is related to a ratio of the first target code rate to the second target code rate.

In a possible implementation, the length of the second bit sequence satisfies $E'_r = E_r \times \dfrac{R}{R'}$ , where $E'_r$ represents the length of the second bit sequence, $E_r$ represents the length of the first bit sequence, $R$ represents the first target code rate, and $R'$ represents the second target code rate.

In a possible implementation, the first bit sequence includes a system bit sequence with a length of *Ms* and a check bit sequence with a length of *Mp*; and the second bit sequence includes the system bit sequence with the length of *Ms* and a check bit sequence with a length of *Mp', and Mp >Mp';* or the second bit sequence includes a system bit sequence with a length of *Ms',* and *Ms ≥ Ms'.*

In a possible implementation, the interface module 702 is further configured to send first indication information. The first indication information indicates the first target code rate and the second target code rate.

In a possible implementation, the interface module 702 is further configured to send second indication information and first configuration information. The second indication information indicates the first target code rate, and the first configuration information is used to configure a correspondence between the first target code rate and the second target code rate.

In a possible implementation, the second target code rate is greater than the first target code rate.

When the communication apparatus 70 is configured to implement the function of the RAN node, for other functions that can be implemented by the communication apparatus 70, refer to the related descriptions of the method embodiment shown in FIG. 4. Details are not described again.

In a simple embodiment, a person skilled in the art may figure out that the communication apparatus 70 may be in a form shown in FIG. 3. For example, the processor 301 in FIG. 3 may invoke the computer-executable instructions stored in the memory 303, to enable the communication apparatus 70 to perform the method in the foregoing method embodiment.

For example, functions/implementation processes of the processing module 701 and the interface module 702 in FIG. 7 may be implemented by the processor 301 in FIG. 3 by invoking the computer-executable instructions stored in the memory 303. Alternatively, a function/an implementation process of the processing module 701 in FIG. 7 may be implemented by the processor 301 in FIG. 3 by invoking the computer-executable instruction stored in the memory 303, and a function/an implementation process of the interface module 702 in FIG. 7 may be implemented by using the communication interface 304 in FIG. 3.

It may be understood that, one or more of the foregoing modules or units may be implemented by software, hardware, or a combination thereof. When any one of the foregoing modules or units is implemented by software, the software exists in a form of a computer program instruction, and is stored in the memory. The processor may be configured to execute the program instruction and implement the foregoing method procedure. The processor may be built into a SoC (system on chip) or an ASIC, or may be an independent semiconductor chip. In addition to the core configured to perform calculation or processing by executing a software instruction, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a chip system, including at least one processor and an interface. The at least one processor is coupled to a memory via an interface, and when the at least one processor executes a computer program or instructions in the memory, the method in any one of the foregoing method embodiments is performed. In a possible implementation, the chip system further includes the memory. Optionally, the chip system may include a chip, or may include a chip and another discrete component. This is not specifically limited in embodiments of this application.

Optionally, an embodiment of this application further provides a computer-readable storage medium. All or some of the procedures in the foregoing method embodiments may be implemented by a computer program instructing related hardware. The program may be stored in the computer-readable storage medium. When the program is executed, the procedures in the foregoing method embodiments may be included. The computer-readable storage medium may be an internal storage unit of the communication apparatus according to any one of the foregoing embodiments, for example, a hard disk drive or an internal memory of the communication apparatus. Alternatively, the computer-readable storage medium may be an external storage device of the communication apparatus, for example, a plug-in hard disk drive, a smart media card (smart media card, SMC), a secure digital (secure digital, SD) card, or a flash card (flash card) that is configured on the communication apparatus. Further, the computer-readable storage medium may include both an internal storage unit and an external storage device of the communication apparatus. The computer-readable storage medium is configured to store the computer program and store other programs and data that are required by the communication apparatus. The computer-readable storage medium may be further configured to temporarily store data that has been output or is to be output.

Optionally, an embodiment of this application further provides a computer program product. All or some of the procedures in the foregoing method embodiments may be implemented by a computer program instructing related hardware. The program may be stored in the computer program product. When the program is executed, the procedures in the foregoing method embodiments may be included.

Optionally, an embodiment of this application further provides computer instructions. All or some of the procedures in the foregoing method embodiments may be completed by the computer instructions instructing related hardware (for example, a computer, a processor, a RAN node, or a terminal). A program may be stored in the computer-readable storage medium or the computer program product.

Optionally, an embodiment of this application further provides a communication system, including the RAN node and the terminal in the foregoing embodiments.

The foregoing descriptions about implementations allow a person skilled in the art to clearly understand that, for the purpose of convenient and brief descriptions, division of the foregoing functional modules is used as an example for illustration. During actual application, the foregoing functions can be allocated to different modules and implemented as required, to be specific, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or the units is merely logical function division and may be another division in an actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. A data transmission method, wherein the method comprises:

   obtaining a first bit sequence, wherein a length of the first bit sequence is associated with a first target code rate, the first bit sequence comprises a second bit sequence, a length of the second bit sequence is associated with a second target code rate, and the first target code rate and the second target code rate are associated with a first modulation and coding scheme MCS index; and
   sending feedback information, wherein the feedback information is used to feed back whether the first bit sequence and the second bit sequence are correctly transmitted.

2. The method according to claim 1, wherein the length of the second bit sequence is related to a ratio of the first target code rate to the second target code rate.

3. The method according to claim 2, wherein the length of the second bit sequence satisfies $E'_r = E_r \times \dfrac{R}{R'}$ , wherein $E'_r$ represents the length of the second bit sequence, $E_r$ represents the length of the first bit sequence, $R$ represents the first target code rate, and $R'$ represents the second target code rate.

4. The method according to any one of claims 1 to 3, wherein

   the first bit sequence comprises a system bit sequence with a length of $Ms$ and a check bit sequence with a length of $Mp$; and
   the second bit sequence comprises the system bit sequence with the length of $Ms$ and a check bit sequence with a length of $Mp'$, and $Mp > Mp'$; or the second bit sequence comprises a system bit sequence with a length of $Ms'$, and $Ms \geq Ms'$.

5. The method according to any one of claims 1 to 4, wherein the method further comprises:
   receiving first indication information, wherein the first indication information indicates the first target code rate and the second target code rate.

6. The method according to any one of claims 1 to 4, wherein the method further comprises:
   receiving second indication information and first configuration information, wherein the second indication information indicates the first target code rate, and the first configuration information is used to configure a correspondence between the first target code rate and the second target code rate.

7. The method according to any one of claims 1 to 6, wherein the second target code rate is greater than the first target code rate.

8. A data transmission method, wherein the method comprises:

outputting a first bit sequence, wherein a length of the first bit sequence is associated with a first target code rate, the first bit sequence comprises a second bit sequence, a length of the second bit sequence is associated with a second target code rate, and the first target code rate and the second target code rate are associated with a first modulation and coding scheme MCS index; and
receiving feedback information, wherein the feedback information is used to feed back whether the first bit sequence and the second bit sequence are correctly transmitted.

9. The method according to claim 8, wherein the length of the second bit sequence is related to a ratio of the first target code rate to the second target code rate.

10. The method according to claim 9, wherein the length of the second bit sequence satisfies $E'_r = E_r \times \dfrac{R}{R'}$ , wherein $E'_r$ represents the length of the second bit sequence, $E_r$ represents the length of the first bit sequence, $R$ represents the first target code rate, and $R'$ represents the second target code rate.

11. The method according to any one of claims 8 to 10, wherein

the first bit sequence comprises a system bit sequence with a length of $Ms$ and a check bit sequence with a length of $Mp$; and
the second bit sequence comprises the system bit sequence with the length of $Ms$ and a check bit sequence with a length of $Mp'$, and $Mp > Mp'$; or the second bit sequence comprises a system bit sequence with a length of $Ms'$, and $Ms \geq Ms'$.

12. The method according to any one of claims 8 to 11, wherein the method further comprises:
sending first indication information, wherein the first indication information indicates the first target code rate and the second target code rate.

13. The method according to any one of claims 8 to 11, wherein the method further comprises:
sending second indication information and first configuration information, wherein the second indication information indicates the first target code rate, and the first configuration information is used to configure a correspondence between the first target code rate and the second target code rate.

14. The method according to any one of claims 8 to 13, wherein the second target code rate is greater than the first target code rate.

15. A communication apparatus, wherein the communication apparatus comprises a processing module and an interface module, wherein

the processing module is configured to obtain a first bit sequence, wherein a length of the first bit sequence is associated with a first target code rate, the first bit sequence comprises a second bit sequence, a length of the second bit sequence is associated with a second target code rate, and the first target code rate and the second target code rate are associated with a first modulation and coding scheme MCS index; and
the interface module is configured to send feedback information, wherein the feedback information is used to feed back whether the first bit sequence and the second bit sequence are correctly transmitted.

16. The communication apparatus according to claim 15, wherein the length of the second bit sequence is related to a ratio of the first target code rate to the second target code rate.

17. The communication apparatus according to claim 16, wherein the length of the second bit sequence satisfies $E'_r = E_r \times \dfrac{R}{R'}$ , wherein $E'_r$ represents the length of the second bit sequence, $E_r$ represents the length of the first bit sequence, $R$ represents the first target code rate, and $R'$ represents the second target code rate.

18. The communication apparatus according to any one of claims 15 to 17, wherein

the first bit sequence comprises a system bit sequence with a length of $Ms$ and a check bit sequence with a length of $Mp$; and

the second bit sequence comprises the system bit sequence with the length of $Ms$ and a check bit sequence with a length of $Mp'$, and $Mp > Mp'$; or the second bit sequence comprises a system bit sequence with a length of $Ms'$, and $Ms \geq Ms'$.

19. The communication apparatus according to any one of claims 15 to 18, wherein
the interface module is further configured to receive first indication information, wherein the first indication information indicates the first target code rate and the second target code rate.

20. The communication apparatus according to any one of claims 15 to 18, wherein
the interface module is further configured to receive second indication information and first configuration information, wherein the second indication information indicates the first target code rate, and the first configuration information is used to configure a correspondence between the first target code rate and the second target code rate.

21. The communication apparatus according to any one of claims 15 to 20, wherein the second target code rate is greater than the first target code rate.

22. A communication apparatus, wherein the communication apparatus comprises a processing module and an interface module, wherein

the processing module is configured to output a first bit sequence, wherein a length of the first bit sequence is associated with a first target code rate, the first bit sequence comprises a second bit sequence, a length of the second bit sequence is associated with a second target code rate, and the first target code rate and the second target code rate are associated with a first modulation and coding scheme MCS index; and

the interface module is configured to receive feedback information, wherein the feedback information is used to feed back whether the first bit sequence and the second bit sequence are correctly transmitted.

23. The communication apparatus according to claim 22, wherein the length of the second bit sequence is related to a ratio of the first target code rate to the second target code rate.

24. The communication apparatus according to claim 23, wherein the length of the second bit sequence satisfies

$$E_r' = E_r \times \frac{R}{R'}$$, wherein $E_r'$ represents the length of the second bit sequence, $E_r$ represents the length of the first bit sequence, $R$ represents the first target code rate, and $R'$ represents the second target code rate.

25. The communication apparatus according to any one of claims 22 to 24, wherein

the first bit sequence comprises a system bit sequence with a length of $Ms$ and a check bit sequence with a length of $Mp$; and

the second bit sequence comprises the system bit sequence with the length of $Ms$ and a check bit sequence with a length of $Mp'$, and $Mp > Mp'$; or the second bit sequence comprises a system bit sequence with a length of $Ms'$, and $Ms \geq Ms'$.

26. The communication apparatus according to any one of claims 22 to 25, wherein
the interface module is further configured to send first indication information, wherein the first indication information indicates the first target code rate and the second target code rate.

27. The communication apparatus according to any one of claims 22 to 25, wherein
the interface module is further configured to send second indication information and first configuration information, wherein the second indication information indicates the first target code rate, and the first configuration information is used to configure a correspondence between the first target code rate and the second target code rate.

28. The communication apparatus according to any one of claims 22 to 27, wherein the second target code rate is greater than the first target code rate.

29. A computer-readable storage medium, wherein the computer-readable storage medium stores a computer program or instructions, and when the computer program or the instructions are executed, a computer is enabled to perform the method according to any one of claims 1 to 7 or the method according to any one of claims 8 to 14.

30. A computer program product, wherein the computer program product comprises computer program code, and when the computer program code is run on a computer, the computer is enabled to implement the method according to any one of claims 1 to 7 or the method according to any one of claims 8 to 14.

31. A communication apparatus, wherein the apparatus comprises a module configured to implement the method according to any one of claims 1 to 7.

32. A communication apparatus, wherein the apparatus comprises a module configured to implement the method according to any one of claims 8 to 14.

33. A communication apparatus, wherein the apparatus comprises a processor, the processor is coupled to a memory, and the processor reads instructions in the memory, and executes the instructions to control the apparatus to perform the method according to any one of claims 1 to 7.

34. A communication apparatus, wherein the apparatus comprises a processor, the processor is coupled to a memory, and the processor reads instructions in the memory, and executes the instructions to control the apparatus to perform the method according to any one of claims 8 to 14.

35. A communication system, comprising the apparatus according to any one of claims 15 to 21 and the apparatus according to any one of claims 22 to 28.

Haptic signal

Time

Video signal

FIG. 1A

RV0

RV3

RV1

RV2

System bit

Check bit

FIG. 1B

$N_{\inf o} \leq 3824$

Yes

$N_{\inf o}' = \max\left(24, 2^n \times \left\lfloor \dfrac{N_{\inf o}}{2^n} \right\rfloor\right)$

where $n = \max(3, \lfloor \log_2(N_{\inf o}) \rfloor - 6)$

Look up Table 5.1.3.2-1 in 3GPP TS 38.214 to find a closest TBS not less than $N_{\inf o}'$

No

$N_{\inf o}' = \max(3824, 2^n \times round(N_{\inf o} - 24)/2^n)$

where $n = \lfloor \log_2(N_{\inf o} - 24) \rfloor - 5$

$R \leq 1/4$

Yes

$TBS = 8 \times C \times \left\lceil \dfrac{\left\lfloor \dfrac{N_{\inf o}' + 24}{8 \times C} \right\rfloor - 24} \right\rceil$

where $C = \left\lceil \dfrac{N_{\inf o}' + 24}{3816} \right\rceil$

No

$N_{\inf o}' > 8424$

Yes

$TBS = 8 \times C \times \left\lceil \dfrac{\left\lfloor \dfrac{N_{\inf o}' + 24}{8 \times C} \right\rfloor - 24} \right\rceil$

where $C = \left\lceil \dfrac{N_{\inf o}' + 24}{8424} \right\rceil$

No

$TBS = 8 \times \left\lceil \dfrac{\left\lfloor \dfrac{N_{\inf o}' + 24}{8 \times C} \right\rfloor - 24} \right\rceil$

where $C=1$, and a total length of the TBS does not exceed a maximum length of one BG 1

FIG. 1C

FIG. 2

FIG. 3

FIG. 4

FIG. 5

| Terminal | | RAN node |
|---|---|---|
| S601 — | Output a first bit sequence | Obtain the first bit sequence — S601 |

FIG. 6

Communication apparatus 70

Processing module — 701

Interface module — 702

FIG. 7

## INTERNATIONAL SEARCH REPORT

| International application No. |
| --- |
| **PCT/CN2023/134713** |

### A. CLASSIFICATION OF SUBJECT MATTER

H04L 1/16(2023.01)i

According to International Patent Classification (IPC) or to both national classification and IPC

### B. FIELDS SEARCHED

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

3GPP, CNKI, CNTXT, ENTXTC, VEN, IEEE: 长度, 第二, 第一, 反馈, 码率, 冗余, 校验, 序列, 索引, 包括, 截断, MCS, code rate, index, first, second, sequence, length

### C. DOCUMENTS CONSIDERED TO BE RELEVANT

| Category* | Citation of document, with indication, where appropriate, of the relevant passages | Relevant to claim No. |
| --- | --- | --- |
| A | WO 2022258071 A1 (HUAWEI TECHNOLOGIES CO., LTD.) 15 December 2022 (2022-12-15) description, page 20, line 1 to page 31, 19th-to-last line, and figure 6 | 1-35 |
| A | US 2020177303 A1 (HUAWEI TECHNOLOGIES CO., LTD.) 04 June 2020 (2020-06-04) entire document | 1-35 |
| A | WO 2019141195 A1 (HUAWEI TECHNOLOGIES CO., LTD.) 25 July 2019 (2019-07-25) entire document | 1-35 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **22 December 2023** | **12 January 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

# EP 4 611 293 A1

**INTERNATIONAL SEARCH REPORT**
Information on patent family members

International application No.

**PCT/CN2023/134713**

| Patent document cited in search report | | | Publication date (day/month/year) | Patent family member(s) | | | Publication date (day/month/year) |
|---|---|---|---|---|---|---|---|
| WO | 2022258071 | A1 | 15 December 2022 | None | | | |
| US | 2020177303 | A1 | 04 June 2020 | EP | 3657707 | A1 | 27 May 2020 |
| | | | | EP | 3657707 | A4 | 29 July 2020 |
| | | | | EP | 3657707 | B1 | 26 July 2023 |
| | | | | US | 11368241 | B2 | 21 June 2022 |
| WO | 2019141195 | A1 | 25 July 2019 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211667707